(19) **Europäisches Patentamt European Patent Office Office européen des brevets**

(11) **EP 4 606 570 A1**

(12) **EUROPEAN PATENT APPLICATION**

(43) Date of publication:
**27.08.2025 Bulletin 2025/35**

(51) International Patent Classification (IPC):
**B33Y 50/00** (2015.01) **B29C 64/386** (2017.01)
**H04N 1/60** (2006.01)

(21) Application number: **24159427.4**

(22) Date of filing: **23.02.2024**

(52) Cooperative Patent Classification (CPC):
**B33Y 50/00; B29C 64/386; H04N 1/6033**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Canon Production Printing Holding B.V.**
**5914 HH Venlo (NL)**

(72) Inventors:
• **MESTROM, Paulus M.A.**
**Venlo (NL)**
• **CALLEWAERT, Tom W.J.**
**Venlo (NL)**

(74) Representative: **Canon Production Printing IP Department**
**Canon Production Printing Netherlands B.V.**
**Van der Grintenstraat 10**
**5914 HH Venlo (NL)**

(54) **METHOD FOR DETERMINING A COLOUR GAMUT OF A PRINTER**

(57)    Method for determining a colour gamut of a printing system. The method comprises the steps of printing samples of an object on a substrate. The samples vary with respect to a thickness of the samples and ink ratios of the ejected inks. For each printed sample a reflectance is measured by means of a spectrophotometer. The measured reflectances are fit with a formula derived from the Kubelka-Munk theory comprising derivations of an absorption coefficient and a scattering coefficient of the ejected inks and transmission and/or reflection coefficients at interfaces between ink and air and vice versa, and between ink and substrate. A full colour gamut of the printer is determined by using the Kubelka-Munk theory by means of the derived coefficients and the derived coefficients are stored in a print controller of the printing system.

A

PRINT FLAT SAMPLES WITH VARIOUS THICKNESSES AND INK RATIOS — S1

MEASURE THE REFLECTANCE FOR EACH SAMPLE — S2

FIT THE REFLECTANCES WITH A 2-FLUX MODEL — S3

USE THE MODEL TOGETHER WITH THE FIT PARAMETERS TO DETERMINE THE FULL COLOUR GAMUT — S4

STORE THE FIT PARAMETERS — S5

B

Fig. 3

EP 4 606 570 A1

**Description**

FIELD OF THE INVENTION

The invention relates to a method for determining a colour gamut of a printing system which comprises a print controller and at least one printhead, wherein the printing system is configured to print 3D objects consisting of a plurality of layers on a substrate in an XY plane in a print direction in the XY plane in at least one pass of the at least one printhead relatively over the substrate per layer, while ejecting inks from nozzles of the at least one printhead towards the substrate in a Z direction according to print instructions received from the print controller. The Z direction is perpendicular to the XY plane.

Understanding the concept of the colour gamut of the printing system and its significance in digital printing is crucial to achieving exceptional colour quality. The colour gamut refers to the range of colours the printing system can reproduce. The combination of inks, substrates, and printing technology affects the reproduction of colour.

The printing system may hereinafter also be referred to as a printer. The printhead may hereinafter also be referred to as an inkjet printing assembly. The term "perpendicular" may hereinafter also be referred to as the term "orthogonal". The term "nozzle" may be also referred to as "print element".

The printhead is meant to be configured to move relatively over the surface. In one case this means that the printhead is moving over the surface while the surface is not moving. In another case it means that the surface is moving under the printhead while the printhead is not moving. In one more other case the surface as well as the printhead are moving. All cases are applicable to the present invention.

A relative move of the printhead in one direction over the surface while ejecting filling material is called a pass. The image formed by filling material which is ejected during one pass on the surface is called a swath.

The filling material may be, including but not limited to, ink of different colours, e.g. cyan, magenta, yellow, black and white, varnish, coating liquid or any other (transparent) liquid or substance which can adhere to each other in order to deliver a high quality 3D print object.

Nozzle distances between nozzles of the at least one printhead determine the resolution in a direction perpendicular to the print direction. In principle the minimum distance between nozzles determines the resolution. In practice the minimum distance between nozzles will be a distance between two adjacent nozzles in a row of nozzles on the printhead.

The printhead according to the present invention comprises a plurality of nozzles which may be arranged in at least one row which is directed in the direction perpendicular to the print direction. The print direction is the direction in which the printhead is moving while printing, i.e. while ejecting filling material towards the surface.

BACKGROUND OF THE INVENTION

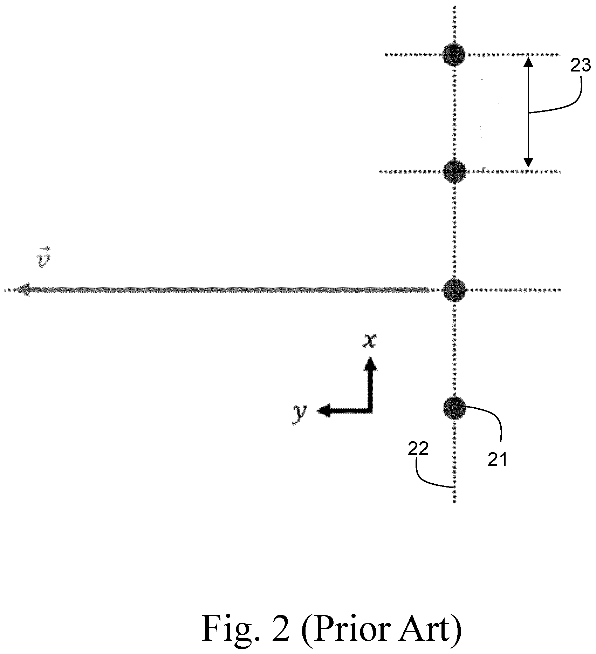

A schematic example of a prior art 3D inkjet printing process for printing multiple layers of an object is shown in Fig. 2. The printhead 22 moves above the print surface residing in the XY plane many times (or equivalently the print surface moves underneath the printhead 22 many times). Whenever the printhead 22 passes the surface in the XY plane, droplets of ink are jetted out of the nozzles 21 in the Z direction onto the surface. In this way, a 3D structure is printed on the surface. The number of passes that are needed depends on the required resolution as well as on the size of the printed object. The standard 3D inkjet printing technique involves printheads whose nozzle arrays are oriented orthogonally to the print direction y which is an obvious choice when the printed objects are large. Fig. 2 shows how the nozzle array of the printhead 22 is oriented as in a standard 3D inkjet printing process. The y direction is defined as the direction of motion of the printhead 22 relative to the surface (indicated by a velocity vector v), whereas the x direction is defined orthogonally to the y direction in the plane of constant gravity. The red dots 21 indicate the nozzles. The nozzle array of the printhead 22 is oriented along the x direction. Fig. 2 also defines a distance 23 between two adjacent nozzles.

In this standard approach the resolution along the x direction can be increased by passing the surface multiple times. In each pass the printhead 22 is slightly shifted in the x direction.

In order to print 3D objects with the correct colour and translucency, the gamut of a multi-material 3D printer should be accurately determined. This means that one should accurately determine how the color and translucency depend on the mixing ratios of the inks and on a local thickness of the printed object. Current solutions for this gamut determination are time consuming or ignore the translucency.

Until now the gamut was determined according to a first prior art solution by first printing a lot of samples in which the mixing ratios and the thickness are varied, and then measure their reflectance using a spectrophotometer. Next, this spectral data can be interpolated to find the colour for all possible mixing ratios and thicknesses. To make this interpolation accurate, many samples need to be printed and many measurements need to be performed. A disadvantage is that this determination process is time consuming.

A second prior art solution is to avoid the disadvantage mentioned hereinabove and only print opaque objects.

Then the colour management of the 3D print process is similar to the colour management of a 2D print process: the thickness of the samples used for the gamut determination can be fixed and only the mixing ratios need to be varied. As a result, much less experiments need to be performed for an accurate gamut determination. The main disadvantage of this approach is that the printed 3D objects will look less realistic when they are opaque, thereby significantly limiting the application range of the printing process.

An object of the invention is to provide a method for efficiently determining a colour gamut for translucent 3D objects.

SUMMARY OF THE INVENTION

According to the present invention this object is achieved by the method according to the invention, wherein the method comprises the steps of

> a) printing samples of an object on the substrate, the samples varying with respect to a thickness of the samples and ink ratios of the ejected inks,
> b) for each printed sample measuring a reflectance by means of a spectrophotometer,
> c) fitting the measured reflectances with a formula derived from the Kubelka-Munk theory comprising derivations of an absorption coefficient and a scattering coefficient of the ejected inks and transmission and/or reflection coefficients at interfaces between ink and air and vice versa, and between ink and substrate,
> d) determining a full colour gamut of the printer by using the Kubelka-Munk theory by means of the coefficients derived in step c), and
> e) storing the derived coefficients in a storage of the print controller.

The spectrophotometer may be a sphere spectrophotometer which records both SPEX (Specular Excluded) and SPIN (Specular included) mode measurements simultaneously. Both SPEX and SPIN measurements can be fit.

The Kubelka-Munk theory devised by Paul Kubelka and Franz Munk, is a fundamental approach to modelling the appearance of paint films. As published in 1931, the theory addresses "the question of how the colour of a substrate is changed by the application of a coat of paint of specified composition and thickness, and especially the thickness of paint needed to obscure the substrate". The mathematical relationship involves just two paint-dependent constants.

In their article, fundamental differential equations are developed using a two-stream approximation for light diffusing through a coating whose absorption and remission (back-scattering) coefficients are known. The total remission from a coating surface is the summation of: 1) the reflectance of the coating surface; 2) the remission from the interior of the coating; and 3) the remission from the surface of the substrate. The intensity considered in the latter two parts is modified by the absorption of the coating material. The concept is based on the simplified picture of two diffuse light fluxes moving through semi-infinite plane-parallel layers, with one flux proceeding "downward", and the other simultaneously "upward".

The present invention may be implemented in an inkjet printer, e.g. a 3D printer or any other kind of inkjet printer that is configured to print translucent 3D objects. The idea is to increase the efficiency of the gamut interpolation by using the mathematical model derived from the Kubelka-Munk theory that predicts how the reflectance behaves. The application of the model in the gamut determination is thus the technical means to obviate the disadvantage of the first prior art solution mentioned hereinabove, without resorting to the practical unfeasible large amounts of measurements required by the current method according to the first prior art solution while at the same time delivering superior results compared to the method of the second prior art solution mentioned hereinabove.

According to an embodiment the method comprises the steps of detaching the printed samples from the substrate, measuring the reflectance of different substrates with various colours such as different shades of gray without the samples placed on top, placing the printed samples on top of the different substrates with the various colours with a top side of the printed samples once facing upwards and once facing downwards in the Z direction, and performing the steps b), c), d) and e).

According to an embodiment the substrate is transparent and the method comprises the step of measuring a reflectance of a coloured substrate and providing the coloured substrate underneath the transparent substrate before performing the steps b), c), d) and e).

According to an embodiment the step c) comprises the sub-step of determining the fit formula from the Kubelka-Munk theory based on an optical geometry of a measurement, wherein the optical geometry is defined by at least one angle of illumination and an angle of viewing relative to a surface of the printed sample.

According to an embodiment the method comprises the step of providing the values of the fitting parameters as input to a model for a prediction and/or control of a colour and translucency of a 3D printed object.

According to an embodiment the spectrophotometer is a sphere spectrophotometer in a specular excluded (SPEX) mode or in a specular included (SPIN) mode.

The present invention also relates to a printing system comprising a print controller and at least one printhead, wherein the printing system is configured to print a plurality of layers of samples on a substrate in an XY plane in a print direction in the XY plane in at least one pass of the at least one printhead relatively over the substrate per layer, while ejecting ink from nozzles of the at least one printhead towards the substrate in a Z direction perpendicular to the XY plane according to print instructions received from the print controller, wherein the print controller is configured to establish a full colour gamut of the printing system by performing a method according to the present invention.

The present invention also relates to a computer program product, including computer readable code embodied on a computer readable medium, said computer readable code comprising instructions for executing the steps of a method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWINGS

Hereinafter the present invention is further elucidated with references to the appended drawings showing non-limiting embodiments and wherein:

Fig. 1    is a printing system in which the invented method is applicable;
Fig. 2    is a schematic drawing of a printhead for printing multiple layers on top of each other according to the prior art as described hereinbefore;
Fig. 3    is a flow diagram of an embodiment of the method according to the present invention;
Fig. 4    schematically shows examples of samples being printed according to the method of the present invention; and
Fig. 5    schematically shows a non-transitory software medium according to the invention.

DETAILED DESCRIPTION OF EMBODIMENTS

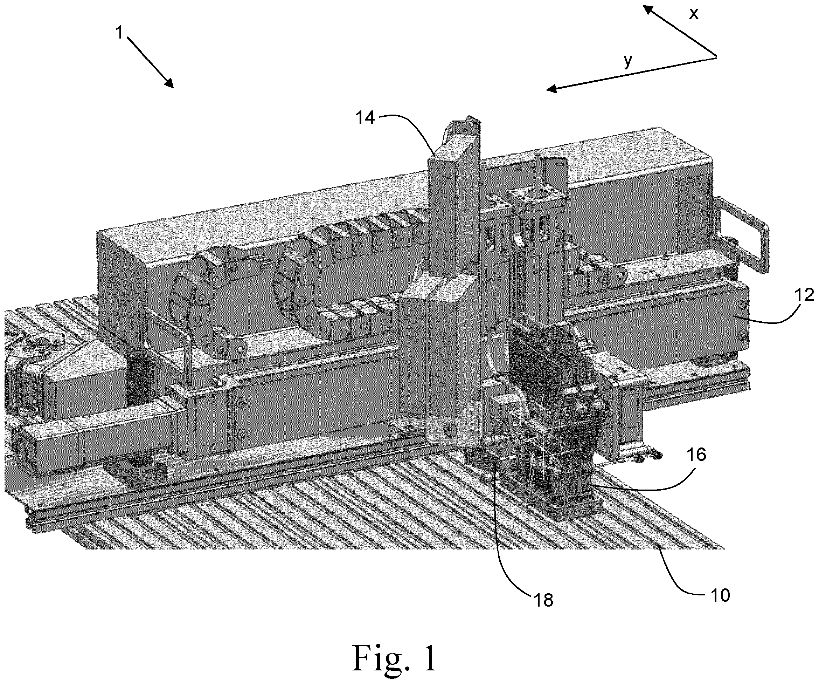

Fig. 1 shows an inkjet printer 1 in which the present invention is applicable. The inkjet printer 1 comprises holders (not shown) for inks to be ejected by means of at least one printhead 16. The at least one printhead 16 is mounted on a carriage 12 which traverses over a print surface 10 in a y direction in the XY plane. The nozzles (not shown) are positioned in the at least one printhead 16 in a row in an x direction in the XY plane perpendicular to the y direction. The at least one printhead 16 is comprised in a printhead holder 18.

The printer 1 in Fig. 1 shows two printheads 16, but a printer having one or more than two printheads mounted on the carriage 12 may also be envisioned and fall under the scope of the present invention.

The printer 1 comprises a print controller 14 comprising boxes with electronics for controlling the printheads 16. The print controller 14 is connected to a digital network for receiving print jobs submitted by users. The print controller comprises a Central Processing Unit (CPU), a Graphical Processor Unit (GPU), a Random Access Memory (RAM), a Read Only Memory (ROM), a network unit, an interface unit, a user interface for user input at the printer 1, a hard disk (HD) and an image processing unit such as a Raster Image Processor (RIP). The aforementioned units are interconnected through a bus system. However, the print controller 14 may also be a distributed controller. The user interface may be provided with user input and display means for receiving specifications of the object which define the object to be printed with a particular resolution. However the specifications of the particular resolution may also be part of a submitted print job to be received by the print controller via the digital network.

The CPU controls the printing system 1 in accordance with control programs stored in the ROM or on the HD and a local user interface panel. The CPU also controls the image processing unit and the GPU. The ROM stores programs and data such as boot program, set-up program, various set-up data or the like, which are to be read out and executed by the CPU. The hard disk is an example of a non-volatile storage unit for storing and saving programs and data which make the CPU execute a print process to be described later. The hard disk also comprises an area for saving the data of externally submitted print jobs. The hard disk may also comprise the fit parameters determined for the colour gamut according to the method of the present invention. The programs and data on the HD are read out onto the RAM by the CPU as needed. The RAM has an area for temporarily storing the programs and data read out from the ROM and HD by the CPU, and a work area which is used by the CPU to execute various processes. The interface unit connects the controller to client devices and to the printing system 1. The network unit connects the print controller 14 to the network and is designed to provide communication with workstations and with other devices reachable via the network. The image processing unit may be implemented as a software component running on an operation system of the controller or as a firmware program, for example embodied in a field-programmable gate array (FPGA) or an application-specific integrated circuit (ASIC). The image processing unit has functions for reading, editing, interpreting and rasterizing the print job data. Said print job data contains image data to be printed i.e. pixel or voxel data of the object to be printed, described in a Page Description Language or the like, image processing attributes and print settings like a number of layers to be printed on top of each other, a desired resolution, a desired ink material, a desired resolution per desired ink material, a desired ink material per desired resolution, etc.

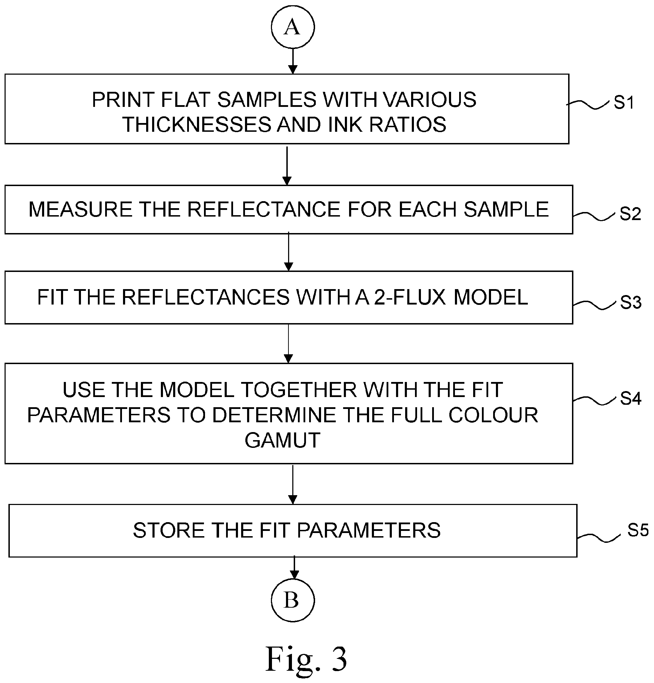

According to an embodiment of the application of the Kubelka-Munk theory in the determination of the full colour gamut of the 3D printing system the following method steps are established according to the present invention. The embodiment of the method is shown in Fig. 3. The method starts in a starting point A and leads to a first step S1.

In the first step S1 samples are printed that are for example flat and square and 1.5 cm wide. A thickness d of the samples and ink ratios $f_i$ are varied. Here the index $i$ = 1,2,3... labels the inks that are used in the print process. For notational convenience, we define the ink ratio vector $\vec{f}$ = $(f_{1,2},...)$.

In a second step S2 the reflectance $R_{SPEX}(\lambda,d,\vec{f})$ is measured for each sample using a spectrophotometer, for example a sphere spectrophotometer in a SPEX mode. Lambda $\lambda$ is the wavelength. The spectrophotometer typically measures the reflectance (in the SPEX and SPIN mode) at 31 wavelengths: 400 nm, 410 nm, 420 nm, ... , 700 nm (nanometer). From the reflectance in this range of wavelengths, the colour can be calculated.

In a third step S3 the experimental data is fit with a formula derived from the Kubelka-Munk theory. For example,

$$R_{SPEX}(\lambda,d,\vec{f}) = T_{a\text{-}i}(\lambda) * (1 - R_{i\text{-}a}(\lambda)) * R_{KM}(\lambda,d,\vec{f}) / (1 - R_{i\text{-}a}(\lambda) * R_{KM}(\lambda,d,\vec{f})),$$

where $T_{a\text{-}i}(\lambda)$ is the transmission coefficient at the air-ink interface, $R_{i\text{-}a}(\lambda)$ is the reflection coefficient at the ink-air interface and

$$R_{KM}(\lambda,d,\vec{f}) = (1 - R_{i\text{-}s}(\lambda) [a(\lambda,\vec{f}) - b(\lambda,\vec{f}) * coth\, b(\lambda,\vec{f}) * S(\lambda,\vec{f}) * d)] / a(\lambda,\vec{f}) - R_{i\text{-}s}(\lambda) + b(\lambda,\vec{f}) * coth\, b(\lambda,\vec{f}) * S(\lambda, \vec{f}) * d)$$

where $a(\lambda,\vec{f}) = (S(\lambda,\vec{f}) + K(\lambda,\vec{f})) / S(\lambda,\vec{f})$, $b(\lambda,\vec{f}) = 1 / S(\lambda,\vec{f}) \sqrt{(K(\lambda,\vec{f})(K(\lambda,\vec{f}) + 2S(\lambda,\vec{f})))}$, $R_{i\text{-}s}(\lambda)$ is the reflection coefficient at the ink-substrate interface, $K(\lambda,\vec{f})$ is the absorption coefficient of the printed sample and $S(\lambda,\vec{f})$ is the scattering coefficient of the printed sample.

$K(\lambda,\vec{f})$ and $S(\lambda,\vec{f})$ are related to the absorption and scattering coefficients of the inks ($K_i(\lambda)$ and $S_i(\lambda)$, respectively) under the assumption that the inks are perfectly mixed in the printing process, wherein $K(\lambda,\vec{f}) = \vec{K}(\lambda) \cdot \vec{f}$ and $S(\lambda,\vec{f}) = \vec{S}(\lambda) \cdot \vec{f}$

where $\vec{K}(\lambda)$ = $(K_1(\lambda),K_2(\lambda),K_3(\lambda),...)$ and $\vec{S}(\lambda)=(S_1(\lambda),S_2(\lambda),S_3(\lambda),...)$.

In this example, the fit parameters are thus $\vec{K}(\lambda), \vec{S}(\lambda), R_{i\text{-}a}(\lambda), R_{i\text{-}s}(\lambda)$ and $T_{a\text{-}i}(\lambda)$. The formula of the Kubelka-Munk theory together with the fit parameters form a 2-flux model, i.e. the formula for $R_{SPEX}(\lambda,d,\vec{f})$ is derived from the 2-flux model based on the Kubelka-Munk theory.

In a fourth step S4 the theory of Kubelka-Munk is used together with the values of the fit parameters to determine the full colour gamut.

In a fifth step S5 the values of the fit parameters are stored in the print controller of the 3D printing system. For the storage of the values there are two possible embodiments. In a first embodiment the fit parameters are stored in the print controller and when mixing ratios need to be determined for a particular colour and translucency, the 2-flux model can be used with the fit parameters in order to calculate the optimal mixing ratios. In a second embodiment a colour and translucency is calculated for a plurality of mixing ratios en thicknesses and the calculated colour and translucency is stored in the print controller. When mixing ratios need to be determined for a particular colour and translucency, the data can be interpolated.

The practical implementation of the fifth step S5, for example according to the first embodiment or to the second embodiment, is dependent on the technical specifications of the printer.

The method ends in an end point B.

Optionally, one can detach the samples from the substrate, place the samples on top of different substrates with various colours (e.g., black, white, various shades of gray) with the top side of the samples facing once upwards and once downwards, measure the reflectance of the samples and the reflectance of these substrates without the samples, and fit the experimental data with a formula derived from the Kubelka-Munk theory. The advantage of this option is that more measurements can be performed per sample, so that less samples need to be printed for an accurate fit.

Another option is to print the samples on a transparent substrate without the need to detach the samples. This substrate can be placed on top of different substrates with various colours (e.g., black, white, various shades of gray), after which the reflectance of the samples is measured. The reflectance of the substrates is also measured. Next, the experimental data is again fit with a formula derived from the Kubelka-Munk theory. Again, the advantage is that more measurements can be performed per sample, so that less samples need to be printed for an accurate fit.

The theory of Kubelka-Munk used in the third step S3 can be adjusted and/or extended to optimize the fit with the experimental data. What the best fit formula will be, depends on many properties like the magnitude of the absorption and scattering coefficients of the inks and the optical geometry of a measurement that is defined by the angle of illumination and the angle of viewing relative to the surface of the object.

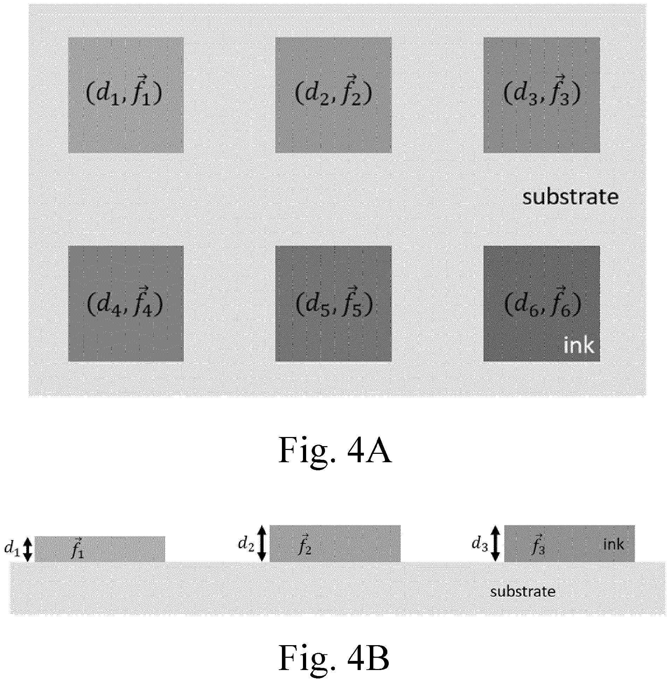

Step S1 of the method according to the present invention involves a series of printed samples with various thickness d and ink ratios $f^{\rightarrow}$. Fig. 4A shows a schematic top view of square samples on top of a substrate using various thicknesses $d$ and mixing ratios $f^{\rightarrow}$. Fig. 4B shows a schematic side view of square samples printed on top of a substrate using various thicknesses $d$ and mixing ratios $f^{\rightarrow}$.

The method according to the present invention involves less printed samples and less reflectance measurements. The gamut determination is thus more efficient.

The method according to the present invention provides the values of physical parameters (namely, $K^{\rightarrow}(\lambda)$, $S^{\rightarrow}(\lambda)$, $R_{i\text{-}a}(\lambda)$, $R_{i\text{-}s}(\lambda)$ and $T_{a\text{-}i}(A)$) that can be used as input in more complex models to predict and/or control the colour and translucency of translucent 3D printed objects with complex geometries, e.g. dental implants, medical models and photorealistic 3D graphic arts prints.

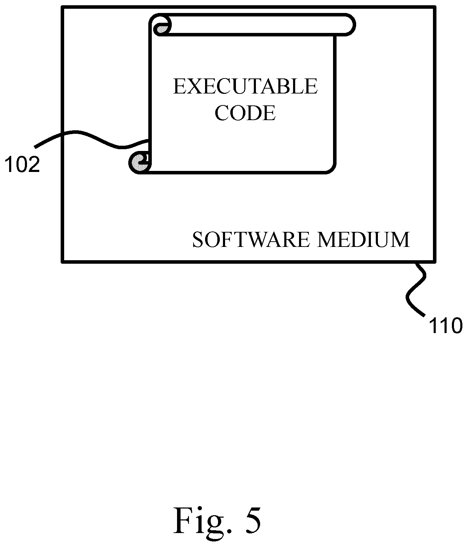

Fig. 5 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. Method for determining a colour gamut of a printing system which comprises a print controller and at least one printhead, wherein the printing system is configured to print 3D objects consisting of a plurality of layers on a substrate in an XY plane in a print direction in the XY plane in at least one pass of the at least one printhead relatively over the substrate per layer, while ejecting inks from nozzles of the at least one printhead towards the substrate in a Z direction according to print instructions received from the print controller,
   wherein the method comprises the steps of

   a) printing samples of an object on the substrate, the samples varying with respect to a thickness of the samples and ink ratios of the ejected inks,
   b) for each printed sample measuring a reflectance by means of a spectrophotometer,
   c) fitting the measured reflectances with a formula derived from the Kubelka-Munk theory comprising derivations of an absorption coefficient and a scattering coefficient of the ejected inks and transmission and/or reflection coefficients at interfaces between ink and air and vice versa, and between ink and substrate,
   d) determining a full colour gamut of the printer by using the Kubelka-Munk theory by means of the coefficients derived in step c), and
   e) storing the derived coefficients in a storage of the print controller.

2. Method according to claim 1, wherein the method comprises the steps of detaching the printed samples from the substrate, measuring the reflectance of different substrates with various colours like different shades of gray without the samples placed on top, placing the printed samples on top of the different substrates with the various colours with a top side of the printed samples once facing upwards and once facing downwards in the Z direction, and performing the steps b), c), d) and e).

3. Method according to any one of the preceding claims, wherein the substrate is transparent and the method comprises the step of measuring a reflectance of a coloured substrate and providing the coloured substrate underneath the transparent substrate before performing the steps b), c), d) and e).

4. Method according to any one of the preceding claims, wherein the step c) comprises the sub-step of determining the fit formula from the Kubelka-Munk theory based on an optical geometry of a measurement, wherein the optical geometry is defined by at least one angle of illumination and an angle of viewing relative to a surface of the printed sample.

5. Method according to any one of the preceding claims, wherein the method comprises the step of providing the values of the fitting parameters as input to a model for a prediction and/or control of a colour and translucency of a 3D printed object.

6. Method according to any of the preceding claims, wherein the spectrophotometer is a sphere spectrophotometer in a specular excluded (SPEX) mode or in a specular included (SPIN) mode.

7. A printing system comprising a print controller and at least one printhead, wherein the printing system is configured to print a plurality of layers of samples on a substrate in an XY plane in a print direction in the XY plane in at least one pass of the at least one printhead relatively over the substrate per layer, while ejecting ink from nozzles of the at least one printhead towards the substrate in a Z direction according to print instructions received from the print controller, wherein the print controller is configured to establish a full colour gamut of the printing system by performing a method according to any one of the preceding claims.

8. A computer program product, including computer readable code embodied on a computer readable medium, said computer readable code comprising instructions for executing the steps of a method according to any one of the claims 1 - 6.

Fig. 1

Fig. 2 (Prior Art)

(A)

↓

| PRINT FLAT SAMPLES WITH VARIOUS THICKNESSES AND INK RATIOS | S1 |

↓

| MEASURE THE REFLECTANCE FOR EACH SAMPLE | S2 |

↓

| FIT THE REFLECTANCES WITH A 2-FLUX MODEL | S3 |

↓

| USE THE MODEL TOGETHER WITH THE FIT PARAMETERS TO DETERMINE THE FULL COLOUR GAMUT | S4 |

↓

| STORE THE FIT PARAMETERS | S5 |

↓

(B)

Fig. 3

$(d_1, \vec{f}_1)$     $(d_2, \vec{f}_2)$     $(d_3, \vec{f}_3)$

substrate

$(d_4, \vec{f}_4)$     $(d_5, \vec{f}_5)$     $(d_6, \vec{f}_6)$

ink

## Fig. 4A

$d_1$ $\vec{f}_1$     $d_2$ $\vec{f}_2$     $d_3$ $\vec{f}_3$ ink

substrate

## Fig. 4B

EXECUTABLE
CODE

SOFTWARE MEDIUM

102

110

Fig. 5

EP 4 606 570 A1

Europäisches
Patentamt

European
Patent Office

Office européen
des brevets

# EUROPEAN SEARCH REPORT

**Application Number**

EP 24 15 9427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HENSLEY BRITTANY D. ET AL: "Colorimetric characterization of a 3D printer with a spectral model", PROCEEDINGS OF THE COLOR AND THE IMAGING CONFERENCE, 1 January 2013 (2013-01-01), pages 160-166, XP093183192, US ISSN: 2166-9635, DOI: 10.2352/CIC.2013.21.1.art00028 Retrieved from the Internet: URL:https://jamesferwerda.com/wp-content/uploads/2015/06/r24_hensley13_cic.pdf [retrieved on 2024-07-08] | 1,4-8 | INV. B33Y50/00 B29C64/386 H04N1/60 |
| A | * the whole document * | 2,3 | |
| X | Guo Shilin ET AL: "Application of Kubelka-Munk Theory in Device-independent Color Space Error Diffusion", , 1 January 1998 (1998-01-01), pages 378-382, XP093183555, Retrieved from the Internet: URL:https://www.imaging.org/common/uploaded%20files/pdfs/Papers/1999/RP-0-93/1806.pdf [retrieved on 2024-07-08] * the whole document * | 1,7,8 | |
| A | US 2018/264733 A1 (MOROVIC PETER [ES] ET AL) 20 September 2018 (2018-09-20) * paragraphs [0014] - [0047] * | 1-8 | |

**TECHNICAL FIELDS SEARCHED (IPC)**

B29C
B33Y
H04N

The present search report has been drawn up for all claims

| Place of search | Date of completion of the search | Examiner |
|---|---|---|
| The Hague | 9 July 2024 | Hardell, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                     

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 9427

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | Publication date |
|---|---|---|---|
| US 2018264733 A1 | 20-09-2018 | CN 107209791 A | 26-09-2017 |
| | | EP 3251036 A1 | 06-12-2017 |
| | | US 2018264733 A1 | 20-09-2018 |
| | | US 2019381735 A1 | 19-12-2019 |
| | | WO 2016119902 A1 | 04-08-2016 |

For more details about this annex : see Official Journal of the European Patent Office, No. 12/82